(19) Europäisches Patentamt
European Patent Office
Office européen des brevets

(11) **EP 3 153 979 B1**

(12) **EUROPEAN PATENT SPECIFICATION**

(45) Date of publication and mention
of the grant of the patent:
**11.12.2024 Bulletin 2024/50**

(21) Application number: **15191048.6**

(22) Date of filing: **22.10.2015**

(51) International Patent Classification (IPC):
*G06F 30/15* (2020.01)     *G06F 30/20* (2020.01)
*F02D 41/14* (2006.01)     *F02D 41/28* (2006.01)

(52) Cooperative Patent Classification (CPC):
**F02D 41/1401; G06F 30/15; G06F 30/20;**
F02D 2041/1432; F02D 2041/1433;
F02D 2041/1437; F02D 2041/288; F02D 2250/14

(54) **METHOD AND SYSTEM FOR CONTROL OF A COMBUSTION ENGINE**

VERFAHREN UND SYSTEM ZUR REGELUNG EINER BRENNKRAFTMASCHINE

PROCÉDÉ ET SYSTÈME DE COMMANDE D'UN MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.08.2015 EP 15182298**

(43) Date of publication of application:
**12.04.2017 Bulletin 2017/15**

(73) Proprietor: **Volvo Car Corporation**
**40 531 Göteborg (SE)**

(72) Inventors:
• **Drenth, Edo**
**25437 Helsingborg (SE)**
• **Törmänen, Mikael**
**43144 Mölndal (SE)**

(74) Representative: **Kransell & Wennborg KB**
**P.O. Box 2096**
**403 12 Göteborg (SE)**

(56) References cited:
EP-A2- 1 905 989          US-A1- 2006 117 834
US-A1- 2006 206 254      US-A1- 2009 118 989
US-A1- 2010 010 724

• "Introduction to Modeling and Control of Internal
Combustion Engine Systems", 31 December
2010, SPRINGER, ISBN: 978-3-642-10775-7,
article GUZZELLA LINO ET AL: "Introduction to
Modeling and Control of Internal Combustion
Engine Systems", XP055957454, DOI:
10.1007/978-3-642-10775-7
• SANDEE J H ET AL: "Analysis and experimental
validation of a sensor-based event-driven
controller", PROCEEDINGS OF THE AMERICAN
CONTROL CONFERENCE, 9 July 2007
(2007-07-09), pages 2867 - 2874, XP031215183,
DOI: 10.1109/ACC.2007.4282632

## Description

Field of the Invention

The present invention relates to a control system for controlling a combustion engine and to a method for controlling a combustion engine.

Background of the Invention

In modern combustion engines, engine control is dependent on accurate measurements of the engine velocity. The measured engine velocity acts as an input parameter for forming a range of control signals which in turn control various features and functions of the engine.

Since the control signals influence the engine performance, and thereby the engine velocity, the engine control system can be referred to as closed loop system, or a feedback control system, wherein the control signal input is dependent on the engine output.

Typically, the engine velocity of an engine is determined from a rotating element of the engine, where for example each rotation can trigger a sensor which in turn gives an indication of the engine velocity. The resulting signal from the sensor will thus be synchronized to the rotation of the rotating element, i.e. to the angle of rotation of the rotating element. Such a signal may also be referred to as being angular synchronous since trigger events occur at regular angular intervals.

However, engine control systems are embodied in one or more engine control units comprising microprocessors operating at a fixed or variable clock rate, and such a clock rate can be refereed to as being time synchronous since events occur at regular time intervals.

Thereby, it is required that the angular synchronous signal is converted to a time synchronous signal in order to be used in a control unit for forming a control signal.

The document with DOI: 10.1007/978-3-642-10775-7 by Guzzella et al, discloses in the introduction (pages 1 to 20) a control system for an internal combustion engine.

The document with DOI: 10.1109/ACC.2007.4282632 by Sandee et al, discloses a signal processing filter to transform an angular synchronous signal obtained from a Hall sensor to a time synchronous signal.

Summary

In view of above-mentioned drawbacks of the prior art, it is an object of the present invention to provide a control system for an internal combustion engine which addresses issues related to sampling of time synchronous signals.

The invention is set out in the appended set of claims.

During development of a control system for an internal combustion engine in a vehicle, it has been observed that during some load cases and for some vehicles, low frequency oscillations in the engine may occur. The oscillations lead to vibrations propagating to the vehicle which in turn may lead to discomfort for the vehicle occupants. The oscillations, often having a frequency in the range of 3-7 Hz, have been observed for many types of vehicles such as small medium and large vehicles, vehicles with petrol and diesel engines, manual and automatic gearbox, vehicles with two-wheel drive and all-wheel drive, and irrespective of the number of cylinders.

The present invention is based on the realization that the root cause of the oscillations may lie in the engine control system, and in particular in the conversion from an angular synchronous signal to a time synchronous signal. More particularly, the oscillation may occur due to signal aliasing of the sampled digital signal, which in turn is used as a basis for forming control signals for the engine. The signal from the sensor representing a rotational velocity can be seen as a pulse train, where each pulse is created when a trigger on the rotating element passes the sensor, i.e. when an interrupt occurs. The sensor signal can thus be referred to as a dynamically triggered signal. Thereby, the time between adjacent pulses is not constant; instead, it varies with varying engine velocity, whereas the sampling of the signal is performed with a predetermined sampling rate which is independent of the engine velocity. Moreover, aliases within the controlled bandwidth and below the bandwidth of the involved actuators of the system do occur. The overall sensitivity of the system to the aliases and the resulting oscillating behavior depends on tolerances of for example bushes, nozzles, valves, etc. Therefore, due to the variation of the specific parts between engines allowed within the given tolerances, one engine may be more prone to oscillatory behavior than another.

Moreover, it has been realized that signal aliasing can be reduced by introducing a specific anti aliasing filtering module to filter the digital time continuous angular synchronous signal representing the engine velocity and forming a time continuous time synchronous signal to be used to create control signals for various functionality of the engine.

The filtering module comprises an integrator configured to integrate the time continuous signal to form an integrated signal; a sampling module configured to continuously sample the integrated signal; an averaging module configured to form average values from the current sample $S_0$ and a previous sample $S_{-2}$, divided by the total sample time h*2, where h is the sample period; and an output module configured to form a time continuous output signal from the average values formed by the averaging module.

The described filtering module provides a filtering function which conserves energy and which improves the overall stability of the system. In particular, the above discussed filter does not deteriorate the energy transfer over the interface between the velocity domain and the time domain, where the angular synchronous signal is converted to a time synchronous signal.

Moreover, it has been found that it is advantageous to form average values from a current sample $S_0$ and from a previous sample $S_{-2}$ being taken two samples before the current one. In other words, for a set of three consecutive samples, the first and the third sample is used to form an average over the entire time interval. This can be seen as a rolling window, so that a continuous moving average- (CMA) filter is formed. It has been found that a CMA-filter as described above using $S_{-2}$ provides the most advantageous properties. Using $S_{-1}$ may cause gain problems and using a value larger than 2 may cause lag problems. In the case For $S_{-1}$, the gain at zero frequency is 0 dB, but for the frequency range beyond 10% of the Nyquist frequency, the gain increases steadily. On the other hand in case of $S_{-n}$, n > 2, the bandwidth of the transferred signals over the interface will become unnecessarily low. For uneven values for n, signals up to the Nyquist frequency may be present, whereas for even n, the gain at the Nyquist frequency is 0. Accordingly, even though different values of n can be used, n = 2 has been shown to be preferable.

According to one embodiment of the invention, the sensor may be a Hall-effect sensor forming a triggering signal when a trigger element of said rotating element passes the sensor. A Hall-effect sensor is a transducer that changes its output voltage as a result of a change in magnetic field adjacent to the sensor. Thereby, the Hall-effect sensor can induce a voltage output pulse, i.e. a triggering signal or interrupt signal, by detecting changes in the magnetic field when a rotating element rotates close to the sensor. The rotating element will comprise features which alter the magnetic field environment, typically arranged equidistantly spaced around the rotating element with a known angle between adjacent features, such that the angular velocity can be determined by detecting the time between consecutive triggering pulses of the sensor. It is understood that also other types of sensors may be used to measure the angular velocity of a rotating element.

According to one embodiment of the invention, the rotating element may be a tone wheel or a ring gear connected to the combustion engine. A tone wheel typically comprises equidistantly spaced openings, and a ring gear comprises equidistantly spaced cogs, where the cogs or openings can act as triggering elements to trigger a sensor arranged to measure the engine velocity, such as a Hall-effect sensor.

The performance parameter of the engine to control is an engine velocity or a torque of the engine. During different load cases, the engine may be required to produce and maintain a particular torque or engine velocity, in which case the measured engine velocity signal is used as an input to provide a feedback loop where engine control signals are formed based on the engine velocity.

According to one embodiment of the invention, the control signals may be configured to control fuel injection of the engine, which influences the operation of the engine both with respect to torque and velocity. Fuel injection is one of a range of functionalities in the engine influencing the engine operation, others are for example timing of the firing of the engine and the operation of the throttle valves in the air duct system.

According to one embodiment of the invention, the control system may advantageously comprise an analog low-pass (LP) filter arranged and configured to remove high frequency noise from the angular synchronous analog signal provided by the sensor. The LP filter would then be arranged after the sensor to receive and filter the sensor signal before it is provided to the ADC.

There is also provided a method for operating an engine control system as defined according to independent claim 7.

The step of filtering comprises integrating the time continuous signal to form an integrated signal; continuously sampling the integrated signal; forming average values from the current sample $S_0$ and a previous sample $S_{-2}$, divided by the total sample time h*2, where h is the sample period; and forming a time continuous output signal from said average values.

According to one embodiment of the invention, the step of integrating may advantageously comprise forming a Left Riemann-sum of the time continuous angular synchronous signal.

Effects and features of the second aspect of the invention are largely analogous to those described above in connection with the first aspects of the invention. Further elaboration of the filter properties and examples of the filter operation can be found in an earlier application, European patent application 15182298.8.

Further features of, and advantages with, the present invention will become apparent when studying the appended claims and the following description. The skilled person realize that different features of the present invention may be combined to create embodiments other than those described in the following, without departing from the scope of the present invention.

Brief Description of the Drawings

These and other aspects of the present invention will now be described in more detail, with reference to the appended drawings showing an example embodiment of the invention, wherein:

Fig. 1 is a schematic illustration of a system according to an embodiment of the invention;
Fig. 2 is a schematic illustration of a filter incorporated in a control system according to an embodiment of the invention;
Fig. 3 is a schematic illustration of a sensor signal from a system according to an embodiment of the invention;
Figs. 4A-D are schematic graphs outlining signals at different stages of processing in a system according to an embodiment of the invention;

Fig. 5 is a flow chart outlining the general steps of a method according to an embodiment of the invention; and

Fig. 6 is a flow chart outlining the general steps of a method according to an embodiment of the invention.

Detailed Description of Example Embodiments

In the present detailed description, various embodiments of the system and method according to the present invention are mainly described with reference to a non-ideal combustion engine for illustrating the functionality of the control system and method.

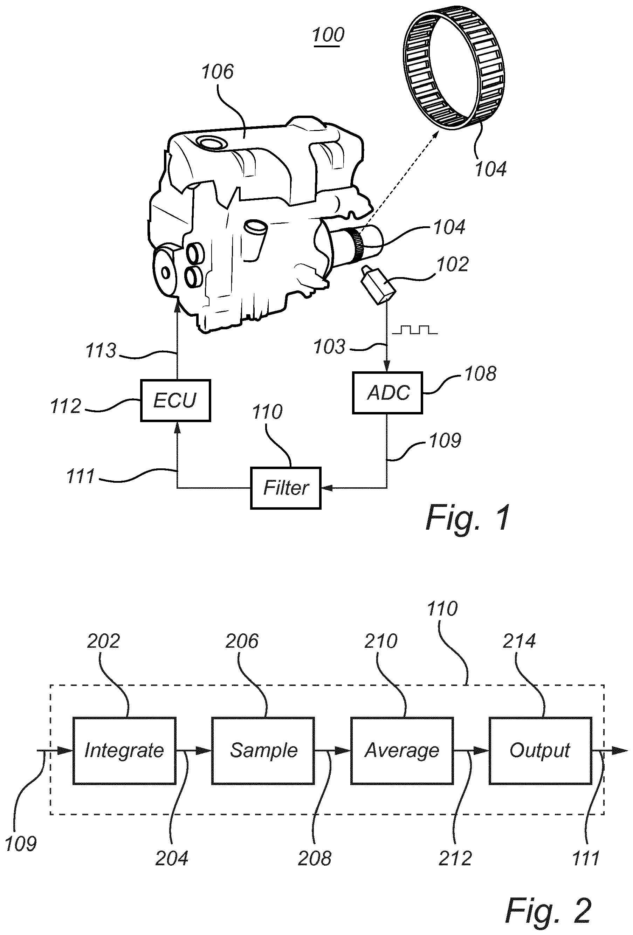

Fig. 1 schematically illustrates a control system 100 for an internal combustion engine 106. The system comprises a sensor 102 arranged and configured to measure a rotational velocity of the engine 106. The sensor 102 is here described as a Hall-effect sensor 102 and the rotating element 104 is here a tone wheel 104 connected to the engine 106. The Hall-effect sensor 102 provides an angular synchronous analog signal 103 representing the rotational velocity of the engine 106, which signal 102 in turn is provided to an AD-converter (ADC) 108 for forming a time continuous angular synchronous digital signal 109. The ADC 108 is triggered by the output signal 103 from the sensor 102, and the sampling and AD-conversion taking place in the ADC 108 is thus angular synchronous, thereby providing an angular synchronous digital signal 109 as an output signal. Next, a filtering module 110 comprising a continuous moving average (CMA) anti aliasing (AA) filter receives and filters the digital signal 109 using time-based sampling to form a filtered time continuous time synchronous digital signal 111. The time synchronous signal 111 is in turn provided to an engine control unit (ECU) 112 which forms one or more time synchronous control signals 113 to be provided to engine control algorithms for controlling various elements of the engine 106. The control signals 113 can for example be configured to control fuel injection, firing and/or throttle valves of the engine 106. It is understood that providing the control signals 113 to the various parts of the engine 106 comprises converting the respective signal into a format suitable for controlling the respective actuators and/or functions.

Fig. 2 is a schematic illustration of the CMA anti-aliasing filter 110. The filter comprises an integrator 202 configured to integrate the time continuous angular synchronous signal 109 to form an integrated signal 204. The integrated 204 signal is provided to a sampling module 206, or a sampling circuit, which is configured to continuously sample the integrated signal 204 using a fixed sampling rate. The sampled signal 208 is then passed to an averaging module 210 configured to form an average value from the current sample $S_0$ and a previous sample $S_{0-n}$, where n=2, divided by the total sample time 2h, where h is the sample period. The averaging module 210 is connected to an output module 214 which outputs a filtered time continuous signal 108 based on the sequence of average values formed by the averaging module 210.

The filter 110 for a time continuous input signal u can be mathematically described as

$$y(z) = \frac{1 - z^{-n}}{nh} \int u \, dt,$$

where n is the integer number, which may also be referred to as the filter order, here n=2, h is the sample time, t is time and y is the time continuous output signal 111.

Even though the ADC 108, the filter 110 and the ECU 112 are illustrated herein as separate units, the control system may equally well be implemented in one or more general purpose ECUs or equivalent processing circuitry.

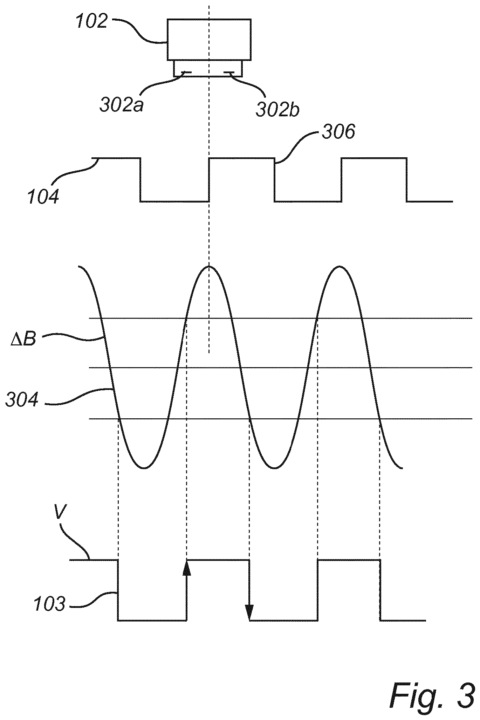

Fig. 3 schematically illustrates the functionality of the sensor 102, here illustrated as a Hall-effect sensor 102. The sensor comprises two Hall-effect elements 302a-b which detect the changes in magnetic field $\Delta B$ 304 due to the structure, i.e. the teeth or gaps, of the tone wheel 104. For each passing of a tooth/gap of the tone wheel 104, a voltage pulse is provided by the sensor 102 to form the output signal 103. Since the elements triggering an output pulse, i.e. the triggering elements 306 of the tone wheel 104 are equidistantly spaced, the angle between adjacent elements 306 is constant. Thereby, the output signal 103 from the sensor 102 is synchronized with the rotation of the rotating element 104 and thus with rotational velocity of the engine 106. Accordingly, the output signal from the sensor 102 is referred to as an angular synchronous analog signal 103.

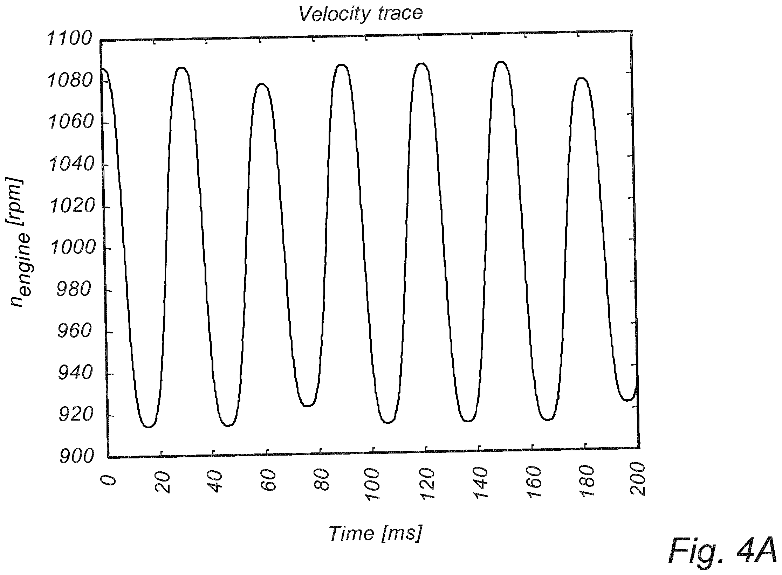

Fig. 4A is a schematic illustration of the actual engine velocity for an example engine. It should be noted that the illustrated example does not necessarily represent the behaviour of a real engine. The present example should be seen as an illustrative example used to illustrate the functionality of a system and a method according to embodiments of the present invention.

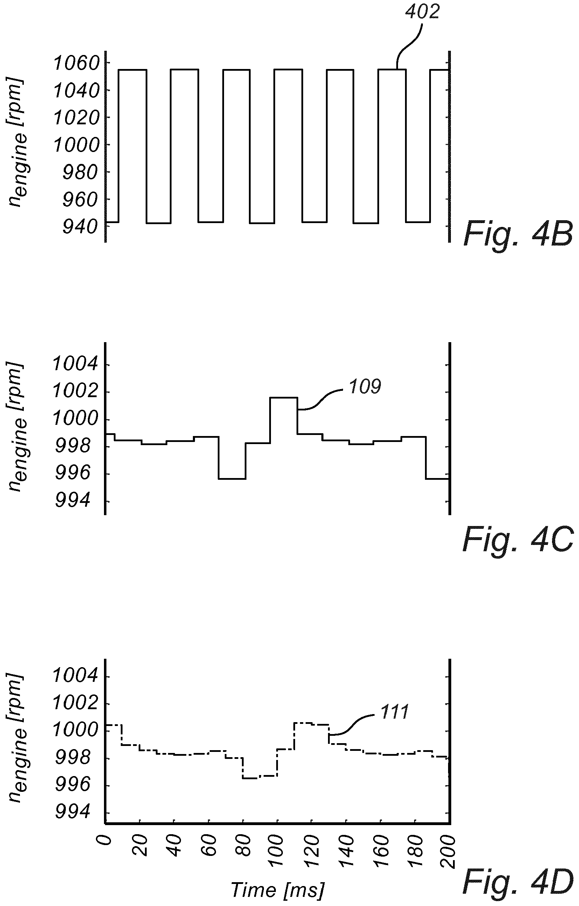

In particular, Fig. 4A illustrates the nominal engine velocity for a four cylinder engine, where one of the cylinders operates at 90% of its full capacity. The reduction in efficiency of one of the cylinders manifests itself as the lower amplitude (i.e. lower rpm) for every fourth peak. The sinusoidal behaviour of the engine velocity comes from the nature of the combustion cycle in a four cylinder engine. Moreover, in the present example, it is assumed that the tone wheel used to measure the velocity is non-ideal, meaning that the gaps have a size which varies within standard manufacturing tolerances. However, even though the effects of the non-ideal tone wheel are too small to be visually observable in the curve of Fig. 4, the effects can be observed in a frequency analysis of the engine velocity trace.

Fig. 4B illustrates the AD-converted angular synchronous sensor signal 402 from the sensor 102.

Next, illustrated in Fig. 4C, the AD-converted sensor signal is averaged to eliminate the variation in the velocity signal resulting from the nature of the combustion cycle in order to determine the nominal velocity variation. More specifically, the signal is averaged over a quarter of a revolution corresponding to one of the four strokes of a cycle of a four cylinder engine. It can be seen that the variation in rpm in Fig. 4C is significantly smaller as a result of the removal of the influence of the combustion cycle. This is a conventional signal processing step in measuring an engine velocity, considered to take place in the ADC 108, and is therefore not discussed in further detail. Fig. 4C thus illustrates the resulting averaged angular synchronous digital signal 109 provided by the ADC 108.

As a next step in the filtering procedure, illustrated in Fig. 4D, the signal 109 is averaged using the CMA averaging procedure described above in relation to Fig. 2, and the sequence of averaged samples form the filtered time continuous time synchronous digital signal 111 illustrated in Fig. 4D. Here, it can be seen that the sampling points of the signal 111 does not coincide in time with the sampling points of the angular synchronous signal 109 of Fig. 4B. Instead, a time synchronous signal has been formed where the time between consecutive samples is constant and based on the sampling rate of the filter.

The signal can now be provided to the ECU 112 for forming control signals 113 to the engine. The signal 111 is thus used in a feedback loop to control systems such as firing, air injection and fuel injection.

The ECM time synchronous controllers generally operate in a relatively low frequency range, where the exact bandwidth is difficult to establish, but where control beyond approximately 10 Hz is often not of interest due to limitations in actuators such as valves and throttles. In view of this, it has been observed that the relatively high frequency aliases relating from tone wheel non-uniformities does not lead to aliases influencing the control signal. Instead, variations in low frequency functions resulting from e.g. ignition/injection timings, valve leakage, duct resistance, etc. can contribute to aliases in the low frequency range which may influence the control signals.

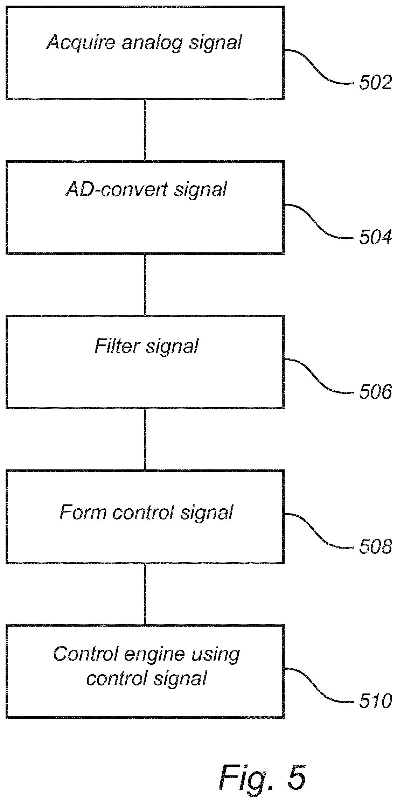

Fig. 5 is a flow chart outlining the general method steps of a method for operating an engine control system according to an embodiment of the invention. The method may advantageously be performed by a system according to any of the above descried embodiments, and the method will be described also with reference to the system 100 of Fig. 1 and the filter 110 of Fig. 2.

The method comprises acquiring 502 an analog angular synchronous signal 103 indicative of a rotational velocity of an element 104 being rotated by an engine 106, AD-converting 504 the analog angular synchronous signal 103 into a digital angular synchronous signal 109 and filtering 506 the digital angular synchronous signal 109 using a continuous moving average anti aliasing filter forming a filtered time continuous time synchronous digital signal 111. The filtered signal 111 is provided to a control 112 unit where a time synchronous control signal 113 is formed 508 based on the filtered digital signal 111. Finally, the control signal 113 is used for controlling 510 a performance parameter of the engine 106 based on the control signal 111.

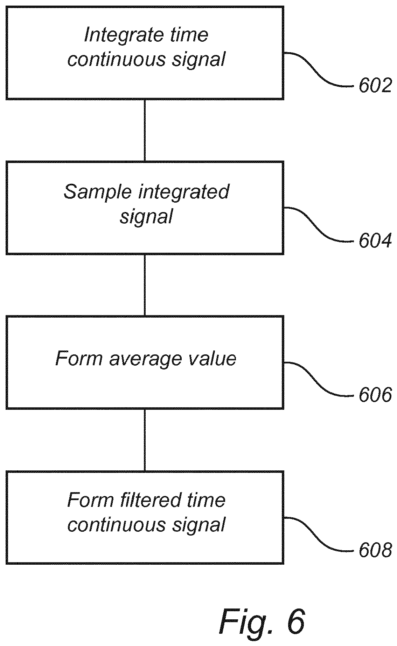

Fig. 6 is a flow chart outlining the general steps of filtering 506 the digital angular synchronous signal 109, described with reference to the filter illustrated in Fig. 2. The method comprises integrating 602 the time continuous angular synchronous signal 109 to form an integrated signal 204. The integrated signal 204 is sampled 604 continuously and average values are formed 606 from the current sample $S_0$ and a previous sample $S_{-2}$, divided by the total sample time $h*2$, where $h$ is the sample period. Finally a filtered time continuous time synchronous output signal 111 is formed 608 from the resulting sequence of average values.

The method may also comprise low-pass filtering of the analog angular synchronous signal 103 provided by the sensor 102 to remove any high frequency noise introduced by the sensor 102.

Even though the invention has been described with reference to specific exemplifying embodiments thereof, many different alterations, modifications and the like will become apparent for those skilled in the art. Also, it should be noted that parts of the system and method may be omitted, interchanged or arranged in various ways, the system and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1. A control system for an internal combustion engine comprising:

   a sensor configured to measure a rotational velocity of a rotating element connected to said engine and to provide an angular synchronous analog signal representing said rotational velocity, wherein rotation of the rotating element triggers the sensor and the trigger events occur at regular angular intervals;
   an analog-to-digital converter connected to said sensor to receive and convert said angular synchronous analog signal into a time continuous angular synchronous digital signal;
a filtering module configured to receive and filter said digital signal using a continuous moving average anti aliasing filter using time-based sampling to form a filtered time continuous time synchronous digital signal, wherein the events in the time continuous time synchronous digital signal occur at regular time intervals, and wherein said filtering module comprises:

an integrator configured to integrate said time continuous signal to form an integrated signal;
a sampling module configured to continuously sample said integrated signal;
an averaging module configured to form average values from the current sample $S_0$ and a previous sample $S_{-2}$ being taken two samples before the current one, divided by the total sample time h*2, where h is the sample period; and
an output module configured to form a time continuous output signal from said average values formed by said averaging module; and
a control unit configured to form at least one time synchronous control signal based on said filtered digital signal, wherein said control signal is provided to an engine control system for controlling an engine velocity or a torque of said engine.

2. The control system according to claim 1, wherein said sensor is a Hall-effect sensor forming a triggering signal when a trigger element of said rotating element passes said sensor.

3. The control system according to claim 2, wherein said rotating element comprises a plurality of equidistantly spaced triggering elements, and wherein an angle between adjacent triggering elements is known.

4. The control system according to any one of the preceding claims, wherein said rotating element comprises a tone wheel or a ring gear connected to said combustion engine.

5. The control system according to any one of the preceding claims, wherein said wherein said control signals are configured to control fuel injection, firing and/or throttle valves of said engine.

6. The control system according to any one of the preceding claims, further comprising an analog low-pass filter arranged and configured to remove high frequency noise from said angular synchronous analog signal provided by said sensor.

7. A method for operating an engine control system, said method comprising:

by a sensor, acquiring an analog angular synchronous signal indicative of a rotational velocity of an element being rotated by an engine, wherein rotation of the rotating element triggers the sensor and the trigger events occur at regular angular intervals;
converting said analog angular synchronous signal into a digital angular synchronous signal;
filtering said digital angular synchronous signal using a continuous moving average anti aliasing filter using time-based sampling forming a filtered time continuous time synchronous digital signal, wherein the events in the time continuous time synchronous digital signal occur at regular time intervals, and wherein filtering comprises:

integrating said time continuous angular synchronous signal to form an integrated signal;
continuously sampling said integrated signal;
forming average values from the current sample $S_0$ and a previous sample S-2 being taken two samples before the current one, divided by the total sample time h*2, where h is the sample period; and
forming a time continuous output signal from said average values; the method further comprising:

providing said signal to a control unit;
in said control unit, forming a time synchronous control signal based on said filtered digital signal; and
controlling an engine velocity or a torque of said engine based on said control signal.

8. The method according to claim 7, wherein said step of integrating comprises forming a Left Riemann-sum of said time continuous angular synchronous signal.

9. The method according to claim 7 or 8, wherein said control signal is configured to control fuel injection firing, and/or throttle valves of said engine.

10. The method according to any one of claims 7 to 9, further comprising low-pass filtering said analog angular synchronous signal to remove high frequency noise.

**Patentansprüche**

1. Regelungssystem für eine Brennkraftmaschine, umfassend:

einen Sensor, der dazu ausgebildet ist, eine Drehgeschwindigkeit eines mit der Maschine verbundenen sich drehenden Elements zu messen und ein winkelsynchrones analoges Signal bereitzustellen, das diese Drehgeschwindigkeit darstellt, wobei die Drehung des sich drehenden Elements den Sensor auslöst und die Auslöseereignisse in regelmäßigen Winkelintervallen auftreten;
einen Analog-Digital-Wandler, der mit dem Sensor verbunden ist, um das winkelsynchrone analoge Signal zu empfangen und in ein zeitkontinuierliches winkelsynchrones digitales Signal umzuwandeln;
ein Filtermodul, das dazu ausgebildet ist, das digitale Signal unter Verwendung eines kontinuierlichen Anti-Aliasing-Filters mit gleitendem Durchschnitt unter Verwendung zeitbasierter Abtastung zu empfangen und zu filtern, um ein gefiltertes zeitkontinuierliches zeitsynchrones digitales Signal zu bilden,
wobei die Ereignisse in dem zeitkontinuierlichen zeitsynchronen digitalen Signal in regelmäßigen Zeitintervallen auftreten, und wobei das Filtermodul umfasst:

einen Integrator, der dazu ausgebildet ist, das zeitkontinuierliche Signal zu integrieren, um ein integriertes Signal zu bilden;
ein Abtastmodul, das dazu ausgebildet ist, das integrierte Signal kontinuierlich abzutasten;
ein Mittelwertbildungsmodul, das dazu ausgebildet ist, Mittelwerte aus der aktuellen Abtastung $S_0$ und einer vorherigen Abtastung $S_{-2}$ zu bilden, die zwei Abtastungen vor der aktuellen entnommen wurde, geteilt durch die Gesamtabtastzeit h*2, wobei h die Abtastperiode ist; und
ein Ausgabemodul, das dazu ausgebildet ist, ein zeitkontinuierliches Ausgabesignal aus den von dem Mittelwertbildungsmodul gebildeten Mittelwerten zu bilden; und
eine Regelungseinheit, die dazu ausgebildet ist, mindestens ein zeitsynchrones Regelungssignal basierend auf dem gefilterten digitalen Signal zu bilden, wobei das Regelungssignal einem Maschineregelungssystem zur Regelung einer Maschinegeschwindigkeit oder eines Drehmoments der Maschine bereitgestellt wird.

2. Regelungssystem nach Anspruch 1, wobei der Sensor ein Hall-Effekt-Sensor ist, der ein Auslösesignal bildet, wenn ein Auslöseelement des sich drehenden Elements den Sensor passiert.

3. Regelungssystem nach Anspruch 2, wobei das sich drehende Element eine Mehrzahl von äquidistant beabstandeten Auslöseelementen umfasst und wobei ein Winkel zwischen benachbarten Auslöseelementen bekannt ist.

4. Regelungssystem nach einem der vorhergehenden Ansprüche, wobei das sich drehende Element ein Schaltrad oder Hohlrad umfasst, das mit dem Brennkraftmaschine verbunden ist.

5. Regelungssystem nach einem der vorhergehenden Ansprüche, wobei die Regelungssignale dazu ausgebildet sind, die Kraftstoffeinspritzung, die Zündung und/oder die Drosselklappen der Maschine zu regeln.

6. Regelungssystem nach einem der vorhergehenden Ansprüche, ferner umfassend einen analogen Tiefpassfilter, der dazu angeordnet und ausgebildet ist, hochfrequentes Rauschen aus dem von dem Sensor bereitgestellten winkelsynchronen Analogsignal zu entfernen.

7. Verfahren zum Betreiben eines Maschineregelungssystems, wobei das Verfahren umfasst:

Erfassen, durch einen Sensor, eines analogen winkelsynchronen Signals, das eine Drehgeschwindigkeit eines von einer Maschine gedrehten Elements angibt, wobei die Drehung des sich drehenden Elements den Sensor auslöst und die Auslöseereignisse in regelmäßigen Winkelintervallen auftreten;
Umwandeln des analogen winkelsynchronen Signals in ein digitales winkelsynchrones Signal;
Filtern des digitalen winkelsynchronen Signals unter Verwendung eines kontinuierlichen gleitenden Mittelwert-Antialiasing-Filters unter Verwendung einer zeitbasierten Abtastung, wodurch ein gefiltertes zeitkontinuierliches zeitsynchrones digitales Signal gebildet wird, wobei die Ereignisse in dem zeitkontinuierlichen zeitsynchronen digitalen Signal in regelmäßigen Zeitintervallen auftreten, und wobei das Filtern umfasst:

Integrieren des zeitkontinuierlichen winkelsynchronen Signals, um ein integriertes Signal zu bilden;
kontinuierliches Abtasten des integrierten Signals;
Bilden von Durchschnittswerten aus der ak-

tuellen Abtastung $S_0$ und einer vorherigen Abtastung $S_{-2}$, die zwei Abtastungen vor der aktuellen entnommen wurde, geteilt durch die Gesamtabtastzeit h*2, wobei h die Abtastperiode ist; und

Bilden eines zeitkontinuierlichen Ausgangssignals aus den Durchschnittswerten;

wobei das Verfahren ferner umfasst:

Bereitstellen des Signals für eine Regelungseinheit;
Bilden eines zeitsynchronen Regelungssignals in der Regelungseinheit basierend auf dem gefilterten digitalen Signal; und
Regeln einer Maschinegeschwindigkeit oder eines Drehmoments der Maschine basierend auf dem Regelungssignal.

8. Verfahren nach Anspruch 7, wobei der Schritt des Integrierens das Bilden einer linken Riemann-Summe des zeitkontinuierlichen winkelsynchronen Signals umfasst.

9. Verfahren nach Anspruch 7 oder 8, wobei das Regelungssignal dazu ausgebildet ist, die Kraftstoffeinspritzung und/oder die Drosselklappen der Maschine zu regeln.

10. Verfahren nach einem der Ansprüche 7 bis 9, ferner umfassend Tiefpassfiltern des analogen winkelsynchronen Signals, um hochfrequentes Rauschen zu entfernen.

## Revendications

1. Système de commande pour moteur à combustion interne comprenant :

un capteur configuré pour mesurer une vitesse de rotation d'un élément rotatif connecté audit moteur et fournir un signal synchrone angulaire analogique représentant ladite vitesse de rotation, dans lequel la rotation de l'élément rotatif déclenche le capteur et les événements de déclenchement se produisent à intervalles angulaires réguliers ;
un convertisseur analogique-numérique connecté audit capteur pour recevoir et convertir ledit signal synchrone angulaire analogique en un signal synchrone angulaire numérique continu dans le temps ;
un module de filtrage configuré pour recevoir et filtrer ledit signal numérique à l'aide d'un filtre anti-repliement à moyenne mobile continue utilisant un échantillonnage basé sur le temps pour former un signal numérique synchrone dans le temps continu dans le temps filtré, dans lequel les événements dans le signal numérique synchrone dans le temps continu dans le temps se produisent à intervalles de temps réguliers, et dans lequel ledit module de filtrage comprend :

un intégrateur configuré pour intégrer ledit signal continu dans le temps pour former un signal intégré ;
un module d'échantillonnage configuré pour échantillonner continûment ledit signal intégré ;
un module de moyennage configuré pour former des valeurs moyennes à partir de l'échantillon courant $S_0$ et d'un échantillon précédent $S_{-2}$ prélevé deux échantillons avant l'échantillon actuel, divisé par le temps d'échantillonnage total h*2, où h est la période d'échantillonnage ; et
un module de sortie configuré pour former un signal de sortie continu dans le temps à partir desdites valeurs moyennes formées par ledit module de moyennage ; et
une unité de commande configurée pour former au moins un signal de commande synchrone dans le temps basé sur ledit signal numérique filtré, dans lequel ledit signal de commande est fourni à un système de commande de moteur pour commander une vitesse de moteur ou un couple dudit moteur.

2. Système de commande selon la revendication 1, dans lequel ledit capteur est un capteur à effet Hall formant un signal de déclenchement lorsqu'un élément de déclenchement dudit élément rotatif passe devant ledit capteur.

3. Système de commande selon la revendication 2, dans lequel ledit élément rotatif comprend une pluralité d'éléments de déclenchement équidistants, et dans lequel un angle entre des éléments de déclenchement adjacents est connu.

4. Système de commande selon l'une quelconque des revendications précédentes, dans lequel ledit élément rotatif comprend une roue phonique ou une couronne dentée connectée audit moteur à combustion.

5. Système de commande selon l'une quelconque des revendications précédentes, dans lequel lesdits signaux de commande sont configurés pour commander des soupapes d'injection de carburant, d'allumage et/ou d'étranglement dudit moteur.

6. Système de commande selon l'une quelconque des revendications précédentes, comprenant en outre un filtre passe-bas analogique agencé et configuré pour supprimer le bruit haute fréquence dudit signal synchrone angulaire analogique fourni par ledit capteur.

**7.** Procédé de fonctionnement d'un système de commande de moteur, ledit procédé comprenant :

par un capteur, l'acquisition d'un signal synchrone angulaire analogique indiquant une vitesse de rotation d'un élément mis en rotation par un moteur, dans lequel la rotation de l'élément rotatif déclenche le capteur et les événements de déclenchement se produisent à intervalles angulaires réguliers ;

la conversion dudit signal synchrone angulaire analogique en un signal synchrone angulaire numérique ;

le filtrage dudit signal synchrone angulaire numérique à l'aide d'un filtre anti-repliement à moyenne mobile continue utilisant un échantillonnage basé sur le temps formant un signal numérique synchrone dans le temps continu dans le temps filtré, dans lequel les événements dans le signal numérique synchrone continu dans le temps se produisent à intervalles de temps réguliers, et dans lequel le filtrage comprend :

l'intégration dudit signal synchrone angulaire continu dans le temps pour former un signal intégré ;

l'échantillonnage continu dudit signal intégré ;

la formation de valeurs moyennes à partir de l'échantillon courant $S_0$ et d'un échantillon précédent $S_{-2}$, divisé par le temps d'échantillonnage total h*2, où h est la période d'échantillonnage ; et

la formation d'un signal de sortie continu dans le temps à partir desdites valeurs moyennes ; le procédé comprenant en outre :

la fourniture dudit signal à une unité de commande ;

dans ladite unité de commande, la formation d'un signal de commande synchrone dans le temps basé sur ledit signal numérique filtré ; et

la commande d'une vitesse de moteur ou d'un couple dudit moteur en fonction dudit signal de commande.

**8.** Procédé selon la revendication 7, dans lequel ladite étape d'intégration comprend la formation d'une somme de Riemann gauche dudit signal synchrone angulaire continu dans le temps.

**9.** Procédé selon la revendication 7 ou 8, dans lequel ledit signal de commande est configuré pour commander des soupapes d'injection de carburant, d'allumage et/ou d'étranglement dudit moteur.

**10.** Procédé selon l'une quelconque des revendications 7 à 9, comprenant en outre le filtrage passe-bas dudit signal synchrone angulaire analogique pour supprimer le bruit haute fréquence.

*100*

*106*

*104*

*104*

*102*

*113*

*103*

*112* ECU

*110*

*108*

ADC

*109*

*111*

Filter

## Fig. 1

*110*

*202*    *206*    *210*    *214*

*109*

Integrate    Sample    Average    Output

*204*    *208*    *212*    *111*

## Fig. 2

*Fig. 3*

Velocity trace

Time [ms]

$n_{engine}$ [rpm]

*Fig. 4A*

EP 3 153 979 B1

Fig. 4B

Fig. 4C

Fig. 4D

| Acquire analog signal | ⌐ 502 |

| AD-convert signal | ⌐ 504 |

| Filter signal | ⌐ 506 |

| Form control signal | ⌐ 508 |

| Control engine using control signal | ⌐ 510 |

*Fig. 5*

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 15182298